# FASCICULE DE BREVET EUROPEEN

(11) **EP 4 341 031 B1**
(45) Date de publication et mention de la délivrance du brevet: **11.06.2025**
(21) Numéro de dépôt: 22728211.8
(22) Date de dépôt: 09.05.2022
(51) Int. Cl.: B23K 9/02, B23K 9/028, B23K 37/02, B23K 37/053, F17C 3/02, B23K 101/12

(54) **PROCÉDÉ DE FERMETURE D'UNE MEMBRANE D'ÉTANCHÉITÉ POUR CUVE ÉTANCHE ET THERMIQUEMENT ISOLANTE**
VERFAHREN ZUM VERSCHLIESSEN EINER DICHTUNGSMEMBRAN FÜR EINEN ABGEDICHTETEN UND WÄRMEISOLIERTEN TANK
METHOD FOR CLOSING A SEALING MEMBRANE FOR A SEALED AND THERMALLY INSULATED TANK

(30) Priorité: 18.05.2021 FR 2105198
(43) Date de publication de la demande: 27.03.2024
(73) Titulaire: GAZTRANSPORT ET TECHNIGAZ, 78470 Saint-Rémy-lès-Chevreuse (FR)
(72) Inventeur: PRIOLEAU, Rémy, 78470 Saint-Remy-Les-Chevreuse (FR); PESQUET, Fabien, 78470 Saint-Remy-Les-Chevreuse (FR); DETAILLE, Geoffrey, 78470 Saint-Remy-Les-Chevreuse (FR); SORREGUIETA-ADER, Bruno, 78470 Saint-Remy-Les-Chevreuse (FR)
(74) Mandataire: Loyer & Abello
(86) Numéro de dépôt international: PCT/EP2022/062458
(87) Numéro de publication internationale: WO 2022/243081

(56) Documents cités:
- EP-A1- 0 611 217
- WO-A1-2019/239048
- FR-A1- 2 552 122
- JP-A- S4 838 848
- JP-U- S4 825 012

## Description

### Domaine technique

L'invention se rapporte au domaine des cuves étanches et plus particulièrement aux cuves étanches et thermiquement isolantes, à membranes, et plus particulièrement à un procédé de fermeture d'une membrane d'étanchéité pour cuve étanche et à un ensemble de soudage, voir les revendications 1 et 16. En particulier, l'invention se rapporte au domaine des cuves étanches et thermiquement isolantes pour le stockage de gaz liquéfié à basse température, telles que des cuves pour le stockage de Gaz Naturel Liquéfié (GNL) à environ -162°C à pression atmosphérique. Ces cuves peuvent être installées à terre ou sur un ouvrage flottant. Dans le cas d'un ouvrage flottant, la cuve peut être destinée au transport de gaz liquéfié ou à recevoir du gaz liquéfié servant de carburant pour la propulsion de l'ouvrage flottant.

### Arrière-plan technologique

Il est bien connu de l'art antérieur des cuves étanches et thermiquement isolantes intégrées à des structures porteuses afin de servir d'installation de stockage terrestre , comprenant une barrière thermiquement isolante secondaire, une membrane d'étanchéité secondaire, une barrière thermiquement isolante primaire et une membrane d'étanchéité primaire. La cuve comporte une pluralité de parois de cuve assemblées les unes aux autres.

Dans ce type de structure, les membranes d'étanchéité sont amenées à être fermées en extrémité de paroi ou au niveau d'une ouverture afin par exemple de permettre la traversée de conduites de chargement/déchargement.

Lors de ces fermetures, la membrane d'étanchéité secondaire ou la membrane d'étanchéité primaire est raccordée de manière étanche à la structure porteuse. Ces raccordements sont réalisés à l'aide d'une pièce pliée à 90° qui est généralement soudée d'une part à la structure porteuse et raccordée d'autre part à la membrane d'étanchéité.

Ces opérations de soudage sont réalisées manuellement.

JP S48 25012 U décrit un ensemble de soudage, et WO 2019/239048 Al décrit un procédé de fermeture d'une membrane d'étanchéité pour cuve étanche conformément au préambule de la revendication 1.

### Résumé

Une idée à la base de l'invention est de simplifier l'opération de soudage dans une zone de fermeture de la membrane d'étanchéité

Selon un mode de réalisation, l'invention fournit un procédé de fermeture d'une membrane d'étanchéité pour cuve étanche, ladite cuve étant notamment thermiquement isolante, conformément à la revendication 1, le procédé comportant les étapes suivantes :
- fournir une paroi de cuve fixée sur une paroi porteuse, la paroi de cuve comportant dans une direction d'épaisseur une barrière thermiquement isolante et une membrane d'étanchéité fixée sur la barrière thermiquement isolante la barrière thermiquement isolante comportant une portion d'extrémité située à une extrémité de la barrière thermiquement isolante dans une première direction,
- fixer une cornière de raccordement métallique au niveau de la portion d'extrémité, la cornière de raccordement métallique comportant une première aile et une deuxième aile reliée à la première aile, en soudant la première aile à l'aide d'un cordon de soudure à une pièce métallique solidaire de la paroi porteuse, et en raccordant la deuxième aile à la membrane d'étanchéité,

dans lequel l'étape de soudage de la première aile est réalisée à l'aide d'une machine de soudage automatique se déplaçant sur un support de soudage, le support de soudage comportant une surface de fixation et une surface de support perpendiculaire à la surface de fixation, la surface de support comportant un moyen de guidage, notamment un rail de guidage, s'étendant dans une deuxième direction perpendiculaire à la première direction et à la direction d'épaisseur, la machine de soudage comportant un système de déplacement coopérant avec le moyen de guidage et étant configuré pour déplacer la machine de soudage selon une avance parallèle à la deuxième direction, la machine de soudage comportant également une torche de soudage,
et dans lequel lors du soudage de la première aile, la surface de fixation du support de soudage est fixée sur la portion d'extrémité de la barrière thermiquement isolante de sorte que la surface de support soit perpendiculaire à la première direction.

Grâce à ces caractéristiques, il est possible d'utiliser une machine de soudage automatique dans une zone de fermeture de membrane d'étanchéité permettant ainsi de simplifier l'opération de soudage et de limiter les coûts. De plus, le support de soudage permet de guider et de maintenir la machine de soudage automatique en se fixant sur des éléments de la cuve déjà montés dans celle-ci à savoir une portion d'extrémité de la barrière thermiquement isolante. De ce fait, il n'est pas nécessaire d'avoir une place allouée au support de soudage et à la machine lors de la fermeture de la membrane d'étanchéité.

Selon des modes de réalisation, un tel procédé peut comporter une ou plusieurs des caractéristiques suivantes.

Selon un mode de réalisation, la machine de soudage comporte également une barre d'accroche fixée au système de déplacement et comprenant une première extrémité distante du système de déplacement et une deuxième extrémité distante du système de déplacement, la première extrémité et la deuxième extrémité étant situées de part et d'autre du système de déplacement dans la direction d'épaisseur, la torche de soudage étant fixée à la première extrémité, et un contrepoids étant fixée à la deuxième extrémité.

Selon un mode de réalisation, la première aile est formée dans un plan perpendiculaire à la première direction tandis que la deuxième aile est formée dans un plan perpendiculaire à la direction d'épaisseur.

Selon un mode de réalisation, la pièce métallique solidaire de la paroi porteuse est un plat d'ancrage faisant saillie de la paroi porteuse dans la direction d'épaisseur et s'étendant dans la deuxième direction, la portion d'extrémité de la barrière thermiquement isolante étant adjacente au plat d'ancrage.

La portion d'extrémité est ainsi soit située contre le plat d'ancrage soit séparé du plat d'ancrage par une plaque de contreplaqué.

Selon un mode de réalisation, la pièce métallique solidaire de la paroi porteuse est une portion métallique de la paroi porteuse.

Selon un mode de réalisation, la barrière thermiquement isolante comporte une pluralité de blocs isolants juxtaposés les uns aux autres et la portion d'extrémité de la barrière thermiquement isolante comporte un bloc isolant d'extrémité.

Selon un mode de réalisation, le cordon de soudure est un premier cordon de soudure, une plaque de fermeture métallique étant fixée sur au moins une partie d'une surface de la portion d'extrémité de la barrière thermiquement isolante opposée à la paroi porteuse, une extrémité de la membrane d'étanchéité étant fixée à plaque de fermeture métallique, et dans lequel lors de l'étape de fixation de la cornière de raccordement, la deuxième aile est soudée à l'aide d'un deuxième cordon de soudure à la plaque de fermeture métallique.

Selon un mode de réalisation, le cordon de soudure est un premier cordon de soudure, une plaque de fermeture métallique étant fixée sur au moins une partie d'une surface de la portion d'extrémité de la barrière thermiquement isolante opposée à la paroi porteuse, et dans lequel lors de l'étape de fixation de la cornière de raccordement, la deuxième aile est soudée à la plaque de fermeture métallique, une extrémité de la membrane d'étanchéité étant également soudée sur la deuxième aile.

De préférence, seul le soudage de l'extrémité de la membrane d'étanchéité sur la deuxième aile de la cornière de raccordement est réalisé à l'aide de la machine soudage automatique et constitue ainsi un deuxième cordon de soudure. Le soudage de la deuxième aile à la plaque de fermeture métallique est un soudage manuel.

Selon un mode de réalisation, la plaque de fermeture comporte des orifices de fixation, la plaque de fermeture étant fixée à la portion d'extrémité de la barrière thermiquement isolante à l'aide de dispositif d'ancrage venant s'insérer dans les orifices de fixation, et dans lequel lors de la réalisation du premier cordon de soudure, la surface de fixation du support de soudage est fixée à l'aide de dispositifs d'ancrage venant s'insérer dans des orifices de fixation laissés libres par les dispositifs d'ancrage de la plaque de fermeture.

Selon un mode de réalisation, la surface de fixation du support de soudage est une première surface de fixation et le support de soudage comporte une deuxième surface de fixation perpendiculaire à la première surface de fixation et parallèle à la surface de support, et dans lequel lors de la réalisation du deuxième cordon de soudure, la deuxième surface de fixation du support de soudage est fixée contre la paroi porteuse de sorte que la surface de support soit parallèle, de préférence coplanaire, à la membrane d'étanchéité, le deuxième cordon de soudure étant réalisé à l'aide de ladite machine de soudage automatique se déplaçant sur le moyen de guidage du support de soudage, ledit support de soudage étant utilisé à la fois pour la réalisation du premier cordon de soudure et du deuxième cordon de soudure.

Ainsi, un même support de soudage et une même machine de soudage peuvent être utilisés à la fois pour souder la première aile de la cornière de raccordement à la paroi porteuse et pour souder la deuxième aile de la cornière de raccordement à la plaque de fermeture ou à la membrane d'étanchéité.

Selon un mode de réalisation, la paroi porteuse comporte des orifices de fixation, les blocs isolants étant ancrés à la paroi porteuse à l'aide de dispositif d'ancrage venant s'insérer dans les orifices de fixation, et dans lequel lors de la réalisation du deuxième cordon de soudure, la deuxième surface de fixation du support de soudage est fixée à l'aide de dispositifs d'ancrage venant s'insérer dans des orifices de fixation de la paroi porteuse laissés libres par les dispositifs d'ancrage des blocs isolants.

Selon un mode de réalisation, la paroi de cuve est inclinée par rapport à l'horizontale, de préférence la paroi de cuve est une paroi verticale.

Selon un mode de réalisation, la deuxième extrémité de la barre d'accroche est équipée d'une roue munie d'un ressort de sorte que la roue soit constamment plaquée contre la surface de support du support de soudage lors de la réalisation du cordon de soudure.

Selon un mode de réalisation, la torche de soudage est une torche électrique de soudage à l'arc, avantageusement sans apport de matière et avec flux de gaz inerte, comme par exemple une torche à électrode en tungstène et flux d'argon.

Selon un mode de réalisation, la barrière thermiquement isolante est une barrière thermiquement isolante secondaire et la membrane d'étanchéité est une membrane d'étanchéité secondaire, et dans lequel la paroi de cuve comporte dans la direction d'épaisseur une barrière thermiquement isolante primaire disposée au moins partiellement sur la membrane d'étanchéité secondaire, et une membrane d'étanchéité primaire fixée sur la barrière thermiquement isolante primaire et destinée à être en contact d'un gaz liquéfié.

Selon un mode de réalisation, la membrane d'étanchéité secondaire est formée d'un matériau composite comportant une feuille d'aluminium prise en sandwich entre deux feuilles de tissu en fibres de verre.

Selon un mode de réalisation, une extrémité de la membrane d'étanchéité secondaire est collée sur la plaque de fermeture métallique ou sur la deuxième aile.

Selon un mode de réalisation, la barrière thermiquement isolante est une barrière thermiquement isolante primaire et la membrane d'étanchéité est une membrane d'étanchéité primaire, et dans lequel la paroi de cuve comporte dans la direction d'épaisseur une barrière thermiquement isolante secondaire agencée entre la barrière thermiquement isolante primaire et la paroi porteuse, une membrane d'étanchéité secondaire agencée entre la barrière thermiquement isolante secondaire et la barrière thermiquement isolante primaire, une première partie de la barrière thermiquement isolante primaire étant disposée sur la membrane d'étanchéité secondaire et une deuxième partie disposée contre la paroi porteuse, ladite portion d'extrémité de la barrière thermiquement isolante primaire étant située dans la deuxième partie de la barrière thermiquement isolante primaire, la première partie et la deuxième partie de la barrière thermiquement isolante primaire étant adjacente l'une de l'autre au droit d'une portion d'extrémité de la barrière thermiquement isolante secondaire.

Selon un mode de réalisation, l'invention fournit aussi un ensemble de soudage conformément à la revendication 16, l'ensemble comportant un support de soudage et une machine de soudage automatique, dans lequel le support de soudage comporte une surface de fixation plane et une surface de support plane perpendiculaire à la surface de fixation, la surface de support portant un moyen de guidage, par exemple un rail de guidage, s'étendant dans une direction, la machine de soudage comportant un système de déplacement coopérant avec le moyen de guidage et étant configuré pour déplacer la machine de soudage selon la direction du rail de guidage, la machine de soudage comportant également une barre d'accroche fixée au système de déplacement et comprenant une première extrémité distante du système de déplacement et une deuxième extrémité distante du système de déplacement, la première extrémité et la deuxième extrémité étant situées de part et d'autre du système de déplacement dans une direction parallèle à la surface de support et perpendiculaire à la direction du moyen de guidage, une torche de soudage étant fixée à la première extrémité, et un contrepoids étant fixée à la deuxième extrémité pour coopérer avec la surface de support à distance du moyen de guidage.

Selon un mode de réalisation, la surface de fixation du support de soudage est une première surface de fixation et le support de soudage comporte en outre une deuxième surface de fixation perpendiculaire à la première surface de fixation et parallèle à la surface de support.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig.1] La [Fig.1] est une représentation schématique écorchée d'une installation de stockage terrestre.
[Fig.2] La [Fig.2] est une vue éclatée du détail II de la [Fig.1].
[Fig.3] La [Fig.3] est une vue éclatée du détail III de la [Fig.1].
[Fig.4] La [Fig.4] est une vue de côté schématique d'une zone de fermeture de membrane secondaire selon un premier mode de réalisation, lors d'une première opération de soudage.
[Fig.5] La [Fig.5] est une vue de côté schématique d'une zone de fermeture de membrane secondaire selon un deuxième mode de réalisation, lors d'une première opération de soudage.
[Fig.6] La [Fig.6] est une vue de côté schématique d'une zone de fermeture de membrane primaire selon le premier mode de réalisation, lors d'une première opération de soudage.
[Fig.7] La [Fig.7] est une vue de côté schématique d'une zone de fermeture de membrane secondaire, lors d'une deuxième opération de soudage.

### Description des modes de réalisation

L'invention va être décrite par la suite en lien avec une installation de stockage de gaz liquéfié qui porte la référence 1 dans la description qui va suivre. L'installation 1 est apte à stocker un gaz liquéfié, en particulier du gaz naturel liquéfié (GNL) à une température d'environ -162°C et à pression atmosphérique ou d'autres gaz liquéfiés. L'installation 1 peut également être apte à stocker d'autres types de liquide, notamment à température ambiante.

L'installation 1 comporte principalement une structure porteuse 10 et une cuve étanche et thermiquement isolante 20 installée dans l'espace interne de la structure porteuse 10.

La structure porteuse 10 comprend une paroi porteuse de fond 11 et une paroi porteuse verticale 12.

L'installation 1 peut être prévue pour être située à terre. La paroi porteuse de fond 11 est alors typiquement horizontale, c'est-à-dire située dans un plan perpendiculaire à la direction de l'accélération de pesanteur aux tolérances dimensionnelles près. La paroi porteuse de fond 11 peut être située au niveau du sol ou éventuellement sous le niveau du sol. La structure porteuse 10 est par exemple réalisée en béton.

En alternative, l'installation 1 peut être prévue pour être installée à bord d'une structure flottante, telle qu'un navire. Dans ce cas, la structure porteuse 10 est une portion d'une double coque appartenant à la structure flottante. La paroi porteuse de fond 11 peut éventuellement être non horizontale, et même être située dans un plan parallèle à la direction de l'accélération de pesanteur aux tolérances dimensionnelles près lorsque la structure flottante est au repos.

La suite de la description va porter plus particulièrement sur une installation de stockage terrestre 1. Le contour de la paroi porteuse de fond 11 est prévu pour avoir la forme d'un polygone régulier à N côtés, où N est un entier supérieur ou égal à 3. De préférence, N est pair. Une installation 1 où N est égal à 8 ou 56 est plus particulièrement intéressante.

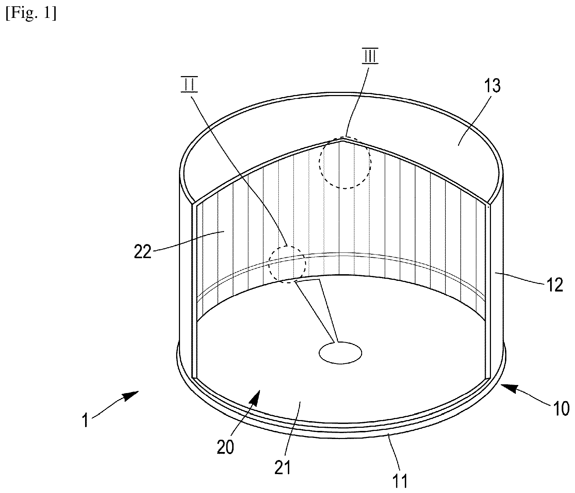

Comme cela est mieux visible sur la [Fig.1], la paroi porteuse verticale 12 forme une surface cylindrique polygonale, avec comme directrice le contour polygonal de la paroi porteuse de fond 11. La paroi porteuse verticale 12 s'étend dans une direction verticale, c'est-à-dire dans une direction perpendiculaire au plan de la paroi porteuse de fond 11 aux tolérances dimensionnelles près.

A l'extrémité de la paroi porteuse verticale 12 opposée à la paroi porteuse de fond 11, la structure porteuse 10 comprend une paroi porteuse de couvercle 13 fermant l'espace interne délimité par la paroi porteuse de fond 11 et la paroi porteuse verticale 12. Cette paroi porteuse de couvercle peut supporter divers équipements utilisables pour acheminer du gaz liquéfié depuis ou vers cet espace interne.

La cuve étanche et thermiquement isolante 20 est installée dans l'espace interne de la structure porteuse 10. La cuve 20 comporte une paroi de fond 21 disposée sur la paroi porteuse de fond 11, et une paroi verticale 22 disposée sur la paroi porteuse verticale 12.

La paroi de fond 21 et la paroi verticale 22 comportent, en allant depuis la structure porteuse vers l'espace intérieur de la cuve 20, une barrière thermiquement isolante secondaire 23, une membrane étanche secondaire 24, une barrière thermiquement isolante primaire 25, et une membrane étanche primaire 26 destinée à être en contact avec le gaz liquéfié contenu dans la cuve 20.

La paroi de fond 21 et la paroi verticale 22 peuvent être réalisées à l'aide d'éléments modulaires. Dans le mode de réalisation décrit ici, ces éléments modulaires correspondent à la technologie GST^{®} commercialisée par la déposante, par exemple. On pourra aussi se référer au document US 6,035,795 pour la description de certains éléments modulaires.

Également à titre d'exemple, de telles cuves à membranes sont notamment décrites dans les demandes de brevet WO2019239048, WO14057221, FR2691520 et FR2877638.

Il va être décrit plus particulièrement par la suite deux zones particulières de la paroi verticale 22 à savoir la zone de fermeture de la membrane d'étanchéité secondaire 24 et la zone de fermeture de la membrane d'étanchéité primaire 26. Sur la paroi verticale 22 de l'installation de stockage terrestre 1 représentée en [Fig.1], la membrane d'étanchéité secondaire 24 et la barrière thermiquement isolante secondaire 23 sont prévues pour s'étendre uniquement d'une extrémité inférieure de la paroi verticale jusqu'à une hauteur prédéterminée de la paroi verticale 22 s'étendant à distance de l'extrémité supérieure de la paroi verticale. Cette hauteur prédéterminée est par exemple de l'ordre de 5m.

Ainsi, la membrane d'étanchéité secondaire 24 est fermée à la hauteur prédéterminée de sorte à être raccordée à la paroi porteuse verticale 12. Après cette hauteur prédéterminée de la paroi verticale 22 et jusqu' à proximité de la paroi porteuse de couvercle 13, la paroi verticale 22 ne comporte plus que la barrière thermiquement isolante primaire 25 qui est directement fixée à la paroi porteuse verticale 12 et la membrane d'étanchéité primaire 26. De ce fait, à proximité de la paroi porteuse de couvercle 13, il est également prévue la fermeture de la membrane d'étanchéité primaire de sorte à la raccorder à la paroi porteuse verticale 12.

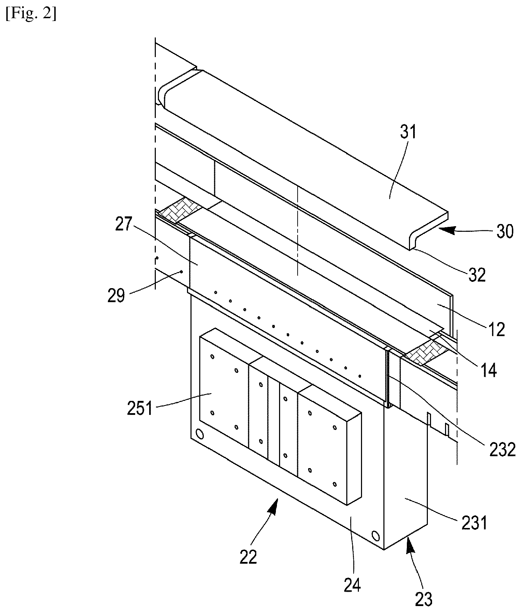

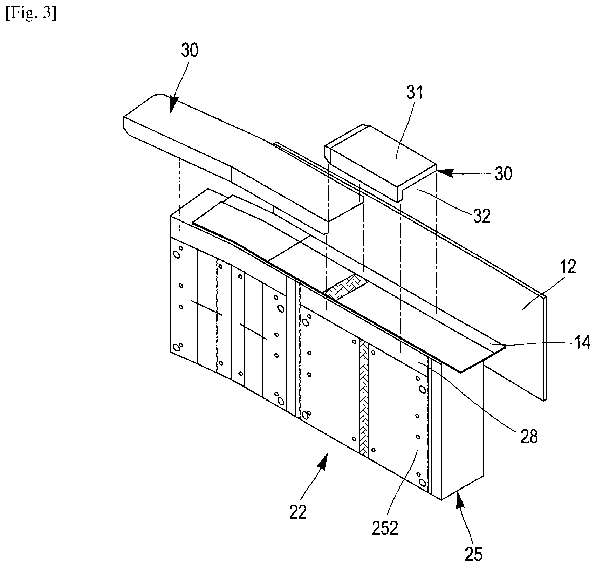

La [Fig.2] représente plus particulièrement la zone de fermeture de la membrane d'étanchéité secondaire 24 tandis que la [Fig.3] représente plus particulièrement la zone de fermeture de la membrane d'étanchéité primaire 26.

Comme partiellement représenté en [Fig.2], la barrière thermiquement isolante secondaire 23 comporte une pluralité de blocs isolants secondaires 231 juxtaposés les uns aux autres et un bloc isolant secondaire d'extrémité 232 situé à une extrémité de la barrière thermiquement isolante secondaire 23 formée au niveau de la hauteur prédéterminée de la paroi verticale 22. Comme représenté sur la [Fig.2], dans ce mode de réalisation, les blocs isolants secondaires 231 sont préassemblés avec une portion de la membrane d'étanchéité secondaire 24 ainsi qu'un ou plusieurs blocs isolants primaires 251. Ces portions de la membrane d'étanchéité secondaire 24 sont ensuite raccordées les unes aux autres à l'aide de bandes souples (non représentées).

La fermeture de la membrane d'étanchéité secondaire 24 est réalisée au niveau du bloc isolant secondaire d'extrémité 232. La fermeture est réalisée à l'aide d'une cornière de raccordement 30 métallique comportant une première aile 31 venant se souder à une pièce de la paroi porteuse verticale 12 et une deuxième aile 32 raccordée à la membrane d'étanchéité secondaire 24. La première aile 31 et la deuxième aile 32, comme représenté en [Fig.2], forme une pièce à angle droit qui vient se positionner au niveau d'une arête du bloc isolant secondaire d'extrémité 232. Dans le premier mode de réalisation représenté notamment en figures 2 à 4, ladite pièce de la paroi porteuse verticale 12 est un plat d'ancrage 14 faisant saillie de la paroi porteuse verticale 12 dans la direction d'épaisseur de la paroi verticale 22 et s'étendant parallèlement à un bord latéral du bloc isolant secondaire d'extrémité 232.

Une plaque de fermeture secondaire 27 métallique est fixée sur une surface du bloc isolant secondaire d'extrémité 232, opposée à la paroi porteuse verticale 12, à l'aide de dispositifs de fixation (non représentés) traversant des orifices 29 ménagées dans la plaque de fermeture secondaire 27. Une extrémité de la membrane d'étanchéité secondaire 24 est fixée à plaque de fermeture secondaire 27 métallique, par collage ou soudage selon le type de membrane d'étanchéité utilisée.

La deuxième aile 32 de la cornière de raccordement 30 vient ainsi se souder à la plaque de fermeture secondaire 27 de sorte à raccorder de manière étanche la cornière de raccordement 30 et la membrane d'étanchéité secondaire 24.

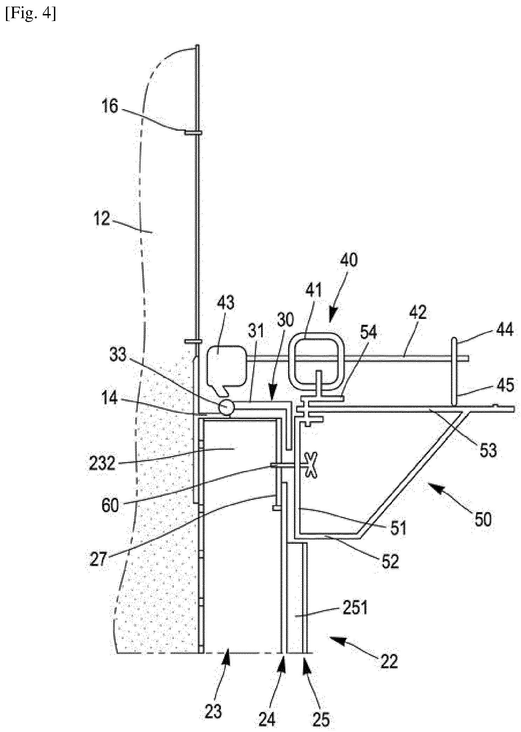

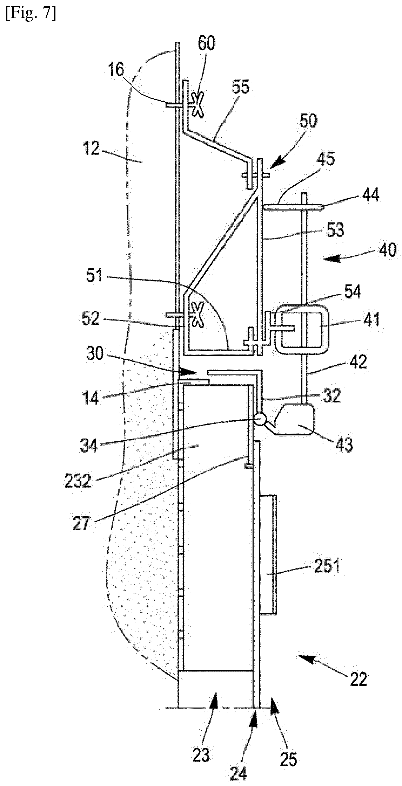

Le soudage de la première aile 31 au plat d'ancrage 14 est réalisé à l'aide d'un premier cordon de soudure 33 dont l'étape de soudage est explicitée ci-dessous en lien avec la [Fig.4]. Le soudage de la deuxième aile 32 à la plaque de fermeture secondaire 27 est réalisé à l'aide d'un deuxième cordon de soudure 34 dont l'étape de soudage est explicitée ci-dessous en lien avec la [Fig.7].

Comme partiellement représenté en [Fig.3], la barrière thermiquement isolante primaire 25 comporte une pluralité de blocs isolants primaires juxtaposés les uns aux autres et un bloc isolant primaire d'extrémité 252 situé à une extrémité de la barrière thermiquement isolante primaire 25 formée à proximité de la paroi porteuse de couvercle 13.

De manière analogue à la membrane d'étanchéité secondaire 24, la membrane d'étanchéité primaire (non représentée) est fermée au niveau du bloc isolant primaire d'extrémité 252. La fermeture est réalisée également à l'aide d'une cornière de raccordement 30 métallique comportant une première aile 31 venant se souder à un plat d'ancrage 14 de la paroi porteuse verticale 12 et une deuxième aile 32 soudée à une plaque de fermeture primaire 28 métallique. La plaque de fermeture primaire 28 est fixée sur une surface du bloc isolant primaire d'extrémité 252, opposée à la paroi porteuse verticale 12.

Comme représenté en [Fig.3] mais qui est également valable au niveau de la membrane d'étanchéité secondaire 24, des cornières de raccordement 30 sont soudées les unes autres de sorte à former une fermeture continue sur la paroi verticale 22 tout autour de la paroi de fond 21.

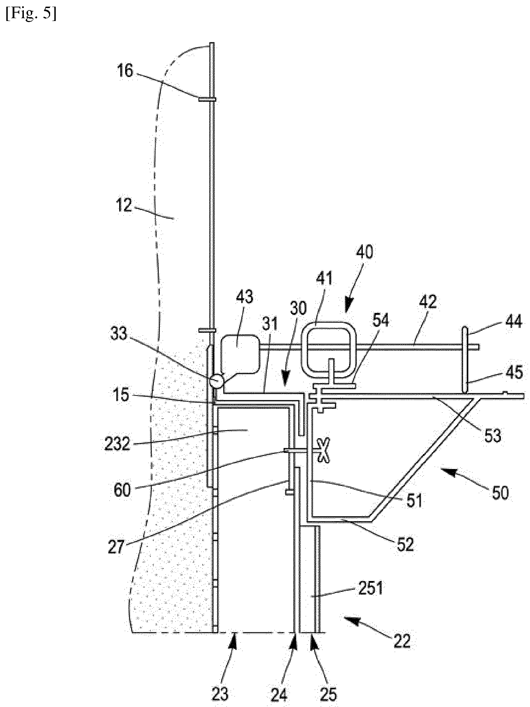

Les figures 4 et 5 présentent l'étape de réalisation du premier cordon de soudure 33, entre la première aile 31 et la pièce de la paroi porteuse verticale 12 selon deux modes de réalisation, de manière à réaliser la fermeture de la membrane d'étanchéité secondaire 24.

Pour réaliser le soudage, il est utilisé un support de soudage 50 et une machine de soudage automatique 40. Le support de soudage 50 comporte une première surface de fixation 51 plane, une deuxième surface de fixation 52 plane qui est reliée perpendiculairement à la première surface de fixation 51, et une surface de support 53 plane qui reliée perpendiculairement à la première surface de fixation 51 de sorte à être parallèle à la deuxième surface de fixation 52. Selon le premier mode de réalisation représenté à la [Fig.4], la surface de support 53 est équipée d'un rail de guidage 54 s'étendant parallèlement au plat d'ancrage 14.

La machine de soudage automatique 40 comporte un système de déplacement 41 coopérant avec le rail de guidage 54, qui est configuré pour déplacer la machine de soudage 40 selon une avance parallèle à la direction du rail de guidage 54. La machine de soudage 40 comporte également une barre d'accroche 42 fixée au système de déplacement 41 et comprenant une première extrémité distante du système de déplacement 41 et une deuxième extrémité distante du système de placement 41. La première extrémité et la deuxième extrémité sont situées de part et d'autre du système de déplacement 41. Une torche de soudage 43 est fixée à la première extrémité tandis qu'un contrepoids 44 est fixée à la deuxième extrémité de la barre d'accroche 42. La deuxième extrémité de la barre d'accroche 42 est également équipée d'une roue 45 munie d'un ressort de sorte que la roue 45 soit constamment plaquée contre la surface de support 53 du support de soudage 50.

Lors de la réalisation du premier cordon de soudure 33, la première surface de fixation 51 du support de soudage 50 est fixée sur le bloc isolant secondaire d'extrémité 232 de sorte que la surface de support 53 soit perpendiculaire à la paroi porteuse verticale 12. Comme représenté en figures 4 et 5, un ou plusieurs dispositifs d'ancrage 60 viennent fixer la première surface de fixation 51 au bloc isolant secondaire d'extrémité 232 en passant par les orifices 29 de la plaque de fermeture secondaire 27. Ainsi, la machine de soudage 40 se déplace sur la surface de support 53 de sorte à ce que la torche de soudage 43 soit située à proximité de la zone à souder entre la première aile 31 et le plat d'ancrage 14.

Le deuxième mode de réalisation illustré en [Fig.5] diffère du mode de réalisation de la [Fig.4] en ce que la première aile 31 n'est pas soudée à un plat d'ancrage mais à une portion métallique 15 fixée parallèlement à la paroi porteuse verticale 12. Dans le cas où la paroi porteuse verticale 12 est métallique, cette portion métallique 15 est simplement une portion de la paroi porteuse verticale 12. Ainsi, dans ce mode de réalisation, la première aile 31 comporte une extrémité repliée, extrémité distante de la deuxième aile 32, de sorte à s'étendre parallèlement à la portion métallique 15. L'extrémité repliée et la portion métallique 15 sont ainsi soudées l'une à l'autre par le premier cordon de soudure 33.

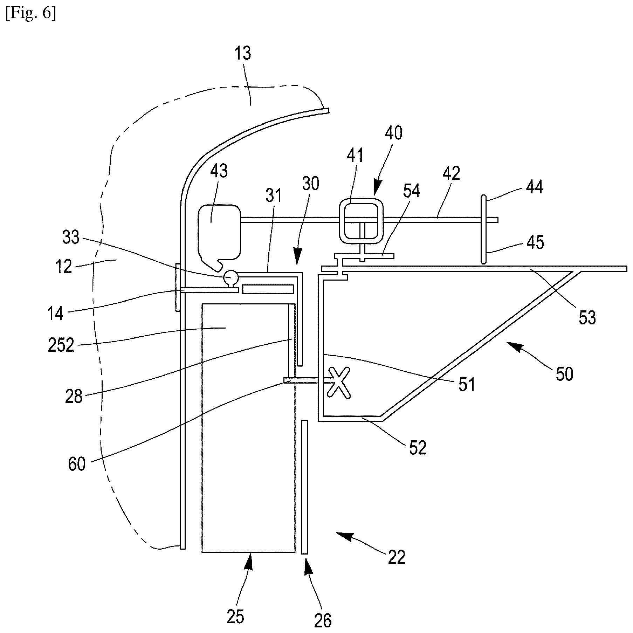

Cette étape de soudage est réalisée de manière analogue à la membrane d'étanchéité primaire que ce soit pour le premier mode de réalisation, représenté en [Fig.6], ou le deuxième mode de réalisation (non représenté). En effet, la machine de soudage 40 est également utilisée pour souder une première aile 31 d'une cornière de raccordement 30 à un plat d'ancrage 14 à l'aide d'un premier cordon de soudure 33, au niveau du bloc isolant primaire d'extrémité 252 de la barrière thermiquement isolante primaire 25. Le support de soudage 50 est également fixé au niveau de la première surface de fixation 51 à une surface du bloc isolant primaire d'extrémité 252, opposée à la paroi porteuse verticale 12, à l'aide d'un ou plusieurs dispositifs d'ancrage 60. La deuxième aile 32 est quant à elle soudée à une plaque de fermeture primaire 28. Une extrémité de la membrane d'étanchéité primaire vient ensuite se souder sur la deuxième aile 32, ou de manière alternative sur la plaque de fermeture primaire 28.

La [Fig.7] présente l'étape de réalisation du deuxième cordon de soudure 34 entre la deuxième aile 32 et la plaque de fermeture secondaire 27, de manière à réaliser la fermeture de la membrane d'étanchéité secondaire 24.

Lors de la réalisation du deuxième cordon de soudure 34, la deuxième surface de fixation 52 du support de soudage 50 est fixée à la paroi porteuse verticale 12 de sorte que la surface de support 53 soit parallèle à la surface du bloc isolant secondaire d'extrémité 232, opposée à la paroi porteuse verticale 12. Comme représenté en [Fig.7] , un ou plusieurs dispositifs d'ancrage 60 viennent fixer la deuxième surface de fixation 52 à la paroi porteuse verticale 12 en passant par des orifices 16 ménagées dans la paroi porteuse verticale 12. De plus, le support de soudage 50 peut comporter une jambe de fixation 55 fixée d'une part à la surface de support 53 et d'autre part à la paroi porteuse verticale 12 au niveau d'autres orifices 16 afin d'augmenter le nombre de points d'ancrage. Ainsi, la machine de soudage 40 se déplace sur la surface de support 53 de sorte à ce que la torche de soudage 43 soit située à proximité de la zone à souder entre la deuxième aile 32 et la plaque de fermeture secondaire 27.

## Revendications

1. Procédé de fermeture d'une membrane d'étanchéité (24, 26) pour cuve étanche, ladite cuve étant notamment thermiquement isolante, le procédé comportant les étapes suivantes :
- fournir une paroi de cuve (22) fixée sur une paroi porteuse (12), la paroi de cuve comportant dans une direction d'épaisseur une barrière thermiquement isolante (23, 25) et une membrane d'étanchéité (24, 26) fixée sur la barrière thermiquement isolante (23, 25), la barrière thermiquement isolante (23, 25) comportant une portion d'extrémité (232, 252) située à une extrémité de la barrière thermiquement isolante (23, 25) dans une première direction,
le procédé étant **caractérisé par** :
- fixer une cornière de raccordement (30) métallique au niveau de la portion d'extrémité (232, 252), la cornière de raccordement (30) métallique comportant une première aile (31) et une deuxième aile (32) reliée à la première aile (31), en soudant la première aile (31) à l'aide d'un cordon de soudure (33, 34) à une pièce métallique (14, 15) solidaire de la paroi porteuse, et en raccordant la deuxième aile (32) à la membrane d'étanchéité (24, 26),
dans lequel l'étape de soudage de la première aile est réalisée à l'aide d'une machine de soudage (40) automatique se déplaçant sur un support de soudage (50), le support de soudage (50) comportant une surface de fixation (51) et une surface de support (53) perpendiculaire à la surface de fixation (51), la surface de support (53) comportant un moyen de guidage (54), notamment un rail de guidage, s'étendant dans une deuxième direction perpendiculaire à la première direction et à la direction d'épaisseur, la machine de soudage (40) comportant un système de déplacement (41) coopérant avec le moyen de guidage (54) et étant configuré pour déplacer la machine de soudage (40) selon une avance parallèle à la deuxième direction, la machine de soudage (40) comportant également une torche de soudage (43)
et dans lequel lors du soudage de la première aile, la surface de fixation (51) du support de soudage (50) est fixée sur la portion d'extrémité (232, 252) de la barrière thermiquement isolante de sorte que la surface de support (53) soit perpendiculaire à la première direction.

2. Procédé de fermeture selon la revendication 1, dans lequel la machine de soudage comporte également une barre d'accroche (42) fixée au système de déplacement (41) et comprenant une première extrémité distante du système de déplacement (41) et une deuxième extrémité distante du système de déplacement (41), la première extrémité et la deuxième extrémité étant situées de part et d'autre du système de déplacement dans la direction d'épaisseur, la torche de soudage (43) étant fixée à la première extrémité, et un contrepoids (44) étant fixée à la deuxième extrémité.

3. Procédé de fermeture selon la revendication 1 ou la revendication 2, dans lequel la première aile (31) est formée dans un plan perpendiculaire à la première direction tandis que la deuxième aile (32) est formée dans un plan perpendiculaire à la direction d'épaisseur.

4. Procédé de fermeture selon l'une des revendications 1 à 3, dans lequel la pièce métallique solidaire de la paroi porteuse (12) est un plat d'ancrage (14) faisant saillie de la paroi porteuse dans la direction d'épaisseur et s'étendant dans la deuxième direction, la portion d'extrémité (232, 252) de la barrière thermiquement isolante étant adjacente au plat d'ancrage.

5. Procédé de fermeture selon l'une des revendications 1 à 3, dans lequel la pièce métallique solidaire de la paroi porteuse est une portion métallique (15) de la paroi porteuse (12).

6. Procédé de fermeture selon l'une des revendications 1 à 5, dans lequel la barrière thermiquement isolante (23, 25) comporte une pluralité de blocs isolants (231) juxtaposés les uns aux autres et la portion d'extrémité de la barrière thermiquement isolante comporte un bloc isolant d'extrémité (232, 252).

7. Procédé de fermeture selon l'une des revendications 1 à 6, dans lequel le cordon de soudure est un premier cordon de soudure (33), une plaque de fermeture métallique (27, 28) étant fixée sur au moins une partie d'une surface de la portion d'extrémité (232, 252) de la barrière thermiquement isolante, opposée à la paroi porteuse (12), une extrémité de la membrane d'étanchéité (24, 26) étant fixée à plaque de fermeture métallique (27, 28), et dans lequel lors de l'étape de fixation de la cornière de raccordement (30), la deuxième aile (32) est soudée à l'aide d'un deuxième cordon de soudure (34) à la plaque de fermeture métallique (27, 28).

8. Procédé de fermeture selon la revendication 7, dans lequel la plaque de fermeture (27, 28) comporte des orifices de fixation (29), la plaque de fermeture (27, 28) étant fixée à la portion d'extrémité (232, 252) de la barrière thermiquement isolante à l'aide de dispositif d'ancrage venant s'insérer dans les orifices de fixation, et dans lequel lors de la réalisation du premier cordon de soudure (33), la surface de fixation (51) du support de soudage (50) est fixée à l'aide de dispositifs d'ancrage (60) venant s'insérer dans des orifices de fixation (29) laissés libres par les dispositifs d'ancrage de la plaque de fermeture (27, 28).

9. Procédé de fermeture selon la revendication 7 ou la revendication 8, dans lequel la surface de fixation du support de soudage (50) est une première surface de fixation (51) et le support de soudage (50) comporte une deuxième surface de fixation (52) perpendiculaire à la première surface de fixation et parallèle à la surface de support (53), et dans lequel lors de la réalisation du deuxième cordon de soudure (34), la deuxième surface de fixation (52) du support de soudage (50) est fixée contre la paroi porteuse (12) de sorte que la surface de support (53) soit parallèle à, de préférence coplanaire à, la membrane d'étanchéité (24, 26), le deuxième cordon de soudure étant réalisé à l'aide de ladite machine de soudage (40) automatique se déplaçant sur le moyen de guidage du support de soudage (50), ledit support de soudage (50) étant utilisé à la fois pour la réalisation du premier cordon de soudure et du deuxième cordon de soudure.

10. Procédé de fermeture selon la revendication 9 prise en combinaison avec la revendication 6, dans lequel la paroi porteuse (12) comporte des orifices de fixation (16), les blocs isolants (231) étant ancrés à la paroi porteuse à l'aide de dispositif d'ancrage venant s'insérer dans les orifices de fixation (16), et dans lequel lors de la réalisation du deuxième cordon de soudure (34), la deuxième surface de fixation (52) du support de soudage (50) est fixée à l'aide de dispositifs d'ancrage (60) venant s'insérer dans des orifices de fixation (16) de la paroi porteuse (12) laissés libres par les dispositifs d'ancrage des blocs isolants (231).

11. Procédé de fermeture selon l'une des revendications 1 à 10, dans lequel la paroi de cuve est inclinée par rapport à l'horizontale, de préférence la paroi de cuve est une paroi verticale (22).

12. Procédé de fermeture selon l'une des revendications 1 à 11, dans lequel la torche de soudage (43) est une torche électrique de soudage à l'arc, avantageusement sans apport de matière et avec flux de gaz inerte, comme par exemple une torche à électrode en tungstène et flux d'argon.

13. Procédé de fermeture selon l'une des revendications 1 à 12, dans lequel la barrière thermiquement isolante est une barrière thermiquement isolante secondaire (23) et la membrane d'étanchéité est une membrane d'étanchéité secondaire (24), et dans lequel la paroi de cuve (22) comporte dans la direction d'épaisseur une barrière thermiquement isolante primaire (25) disposée au moins partiellement sur la membrane d'étanchéité secondaire, et une membrane d'étanchéité primaire fixée sur la barrière thermiquement isolante primaire (25) et destinée à être en contact d'un gaz liquéfié.

14. Procédé de fermeture selon la revendication 13, dans lequel la membrane d'étanchéité secondaire (24) est formée d'un matériau composite comportant une feuille d'aluminium prise en sandwich entre deux feuilles de tissu en fibres de verre.

15. Procédé de fermeture selon l'une des revendications 1 à 12, dans lequel la barrière thermiquement isolante est une barrière thermiquement isolante primaire (25) et la membrane d'étanchéité est une membrane d'étanchéité primaire, et dans lequel la paroi de cuve (22) comporte dans la direction d'épaisseur une barrière thermiquement isolante secondaire (23) agencée entre la barrière thermiquement isolante primaire et la paroi porteuse, une membrane d'étanchéité secondaire (24) agencée entre la barrière thermiquement isolante secondaire et la barrière thermiquement isolante primaire, une première partie de la barrière thermiquement isolante primaire (25) étant disposée sur la membrane d'étanchéité secondaire (24) et une deuxième partie disposée contre la paroi porteuse (12), ladite portion d'extrémité (252) de la barrière thermiquement isolante primaire (25) étant située dans la deuxième partie de la barrière thermiquement isolante primaire (25), la première partie et la deuxième partie de la barrière thermiquement isolante primaire (25) étant adjacente l'une de l'autre au droit d'une portion d'extrémité (232) de la barrière thermiquement isolante secondaire (23).

16. Ensemble de soudage comportant un support de soudage (50) et une machine de soudage (40) automatique, dans lequel le support de soudage (50) comporte une surface de fixation plane (51) et une surface de support plane (53) perpendiculaire à la surface de fixation, la surface de support (53) portant un moyen de guidage (54) s'étendant dans une direction, la machine de soudage (40) comportant un système de déplacement (41) coopérant avec le moyen de guidage (54) et étant configuré pour déplacer la machine de soudage (40) selon la direction du moyen de guidage (54), la machine de soudage (40) comportant également une barre d'accroche (42) fixée au système de déplacement (41) et comprenant une première extrémité distante du système de déplacement (41) et une deuxième extrémité distante du système de déplacement, la première extrémité et la deuxième extrémité étant situées de part et d'autre du système de déplacement (41) dans une direction parallèle à la surface de support et perpendiculaire à la direction du moyen de guidage, une torche de soudage (43) étant fixée à la première extrémité, et un contrepoids (44) étant fixé à la deuxième extrémité pour coopérer avec la surface de support à distance du moyen de guidage.

17. Ensemble selon la revendication 16, dans lequel la surface de fixation du support de soudage (50) est une première surface de fixation (51) et le support de soudage (50) comporte en outre une deuxième surface de fixation (52) perpendiculaire à la première surface de fixation et parallèle à la surface de support (53).

## Patentansprüche

1. Verfahren zum Verschließen einer Dichtungsmembran (24, 26) für einen abgedichteten Tank, wobei der Tank insbesondere wärmeisoliert ist, wobei das Verfahren folgende Schritte umfasst:
- Bereitstellen einer Tankwand (22), die an einer tragenden Wand (12) befestigt ist, wobei die Tankwand in einer Dickenrichtung eine wärmeisolierte Barriere (23, 25) und eine Dichtungsmembran (24, 26) aufweist, die an der wärmeisolierten Barriere (23, 25) befestigt ist, wobei die wärmeisolierte Barriere (23, 25) einen Endabschnitt (232, 252) aufweist, der sich an einem Ende der wärmeisolierten Barriere (23, 25) in einer ersten Richtung befindet, wobei das Verfahren **gekennzeichnet ist durch**:
- Befestigen eines Verbindungswinkels (30) aus Metall im Bereich des Endabschnitts (232, 252), wobei der Verbindungswinkel (30) aus Metall einen erste Schenkel (31) und einen zweiten Schenkel (32) aufweist, der mit dem ersten Schenkel (31) verbunden ist, **durch** Anschweißen des ersten Schenkels (31) mithilfe einer Schweißnaht (33, 34) an einem Metallteil (14, 15), das fest mit der tragenden Wand verbunden ist, und **durch** Verbinden des zweiten Schenkels (32) mit der Dichtungsmembran (24, 26),
wobei der Schweißschritt mithilfe einer automatischen Schweißmaschine (40) durchgeführt wird, die sich auf einer Schweißhalterung (50) bewegt, wobei die Schweißhalterung (50) eine Befestigungsfläche (51) und eine Auflagefläche (53) senkrecht zur Befestigungsfläche (51) aufweist, wobei die Auflagefläche (53) ein Führungsmittel (54), insbesondere eine Führungsschiene aufweist, die sich in einer zweiten Richtung senkrecht zur ersten Richtung und zur Dickenrichtung erstreckt, wobei die Schweißmaschine (40) ein Verschiebesystem (41) aufweist, das mit dem Führungsmittel (54) zusammenwirkt und so ausgelegt ist, dass es die Schweißmaschine (40) mit einem Vorschub parallel zur zweiten Richtung bewegt, wobei die Schweißmaschine (40) auch einen Schweißbrenner (43) aufweist
und wobei beim Anschweißen des ersten Schenkels die Befestigungsfläche (51) der Schweißhalterung (50) derart am Endabschnitt (232, 252) der wärmeisolierten Barriere befestigt wird, dass die Auflagefläche (53) senkrecht zur ersten Richtung verläuft.

2. Verfahren zum Verschließen nach Anspruch 1, wobei die Schweißmaschine auch eine Befestigungsstange (42) aufweist, die am Verschiebesystem (41) befestigt ist und ein erstes vom Verschiebesystem (41) entferntes Ende und ein zweites vom Verschiebesystem (41) entferntes Ende umfasst, wobei sich das erste Ende und das zweite Ende in der Dickenrichtung auf beiden Seiten des Verschiebesystems befinden, wobei der Schweißbrenner (43) am ersten Ende befestigt ist und ein Gegengewicht (44) am zweiten Ende befestigt ist.

3. Verfahren zum Verschließen nach Anspruch 1 oder Anspruch 2, wobei der erste Schenkel (31) in einer Ebene senkrecht zur ersten Richtung ausgebildet ist, während der zweite Schenkel (32) in einer Ebene senkrecht zur Dickenrichtung ausgebildet ist.

4. Verfahren zum Verschließen nach einem der Ansprüche 1 bis 3, wobei das Metallteil, das fest mit der tragenden Wand (12) verbunden ist, ein flaches Ankerprofil (14) ist, das in der Dickenrichtung aus der tragenden Wand ragt und sich in der zweiten Richtung erstreckt, wobei der Endabschnitt (232, 252) der wärmeisolierten Barriere an das flache Ankerprofil angrenzt.

5. Verfahren zum Verschließen nach einem der Ansprüche 1 bis 3, wobei das Metallteil, das fest mit der tragenden Wand verbunden ist, ein metallischer Abschnitt (15) der tragenden Wand (12) ist.

6. Verfahren zum Verschließen nach einem der Ansprüche 1 bis 5, wobei die wärmeisolierte Barriere (23, 25) eine Vielzahl von isolierenden Blöcken (231) aufweist, die nebeneinanderliegen und der Endabschnitt der wärmeisolierten Barriere einen isolierenden Endblock (232, 252) aufweist.

7. Verfahren zum Verschließen nach einem der Ansprüche 1 bis 6, wobei die Schweißnaht eine erste Schweißnaht (33) ist, eine metallische Verschlussplatte (27, 28) an mindestens einem Teil einer Fläche des Endabschnitts (232, 252) der wärmeisolierten Barriere gegenüber von der tragenden Wand (12) befestigt ist, ein Ende der Dichtungsmembran (24, 26) an der metallischen Verschlussplatte (27, 28) befestigt ist, und wobei beim Schritt des Befestigens des Verbindungswinkels (30) der zweite Schenkel (32) mithilfe einer zweiten Schweißnaht (34) an der metallischen Schweißplatte (27, 28) angeschweißt wird.

8. Verfahren zum Verschließen nach Anspruch 7, wobei die Verschlussplatte (27, 28) Befestigungsöffnungen (29) aufweist, die Verschlussplatte (27, 28) am Endabschnitt (232, 252) der wärmeisolierten Barriere mithilfe einer Ankervorrichtung befestigt wird, die in den Befestigungsöffnungen aufgenommen wird, und wobei beim Herstellen der ersten Schweißnaht (33) die Befestigungsfläche (51) der Schweißhalterung (50) mithilfe von Ankervorrichtungen (60) befestigt wird, die in den Befestigungsöffnungen (29) aufgenommen werden, die die Ankervorrichtungen für die Verschlussplatte (27, 28) freilassen.

9. Verfahren zum Verschließen nach Anspruch 7 oder Anspruch 8, wobei die Befestigungsfläche der Schweißhalterung (50) eine erste Befestigungsfläche (51) ist und die Schweißhalterung (50) eine zweite Befestigungsfläche (52) senkrecht zur ersten Befestigungsfläche und parallel zur Auflagefläche (53) aufweist, und wobei beim Herstellen der zweiten Schweißnaht (34) die zweite Befestigungsfläche (52) der Schweißhalterung (50) derart an der tragenden Wand (12) befestigt wird, dass sich die Auflagefläche (53) parallel, vorzugsweise koplanar, zur Dichtungsmembran (24, 26) erstreckt, wobei die zweite Schweißnaht mithilfe der automatischen Schweißmaschine (40) hergestellt wird, die sich auf dem Führungsmittel der Schweißhalterung (50) bewegt, wobei die Schweißhalterung (50) gleichzeitig für die Herstellung der ersten Schweißnaht und der zweiten Schweißnaht verwendet wird.

10. Verfahren zum Verschließen nach Anspruch 9 in Verbindung mit Anspruch 6, wobei die tragende Wand (12) Befestigungsöffnungen (16) aufweist, die isolierenden Blöcke (231) an der tragenden Wand mithilfe einer Ankervorrichtung befestigt wird, die in den Befestigungsöffnungen (16) aufgenommen wird, und wobei beim Herstellen der zweiten Schweißnaht (34) die zweite Befestigungsfläche (52) der Schweißhalterung (50) mithilfe von Ankervorrichtungen (60) befestigt wird, die in den Befestigungsöffnungen (16) der tragenden Wand (12) aufgenommen werden, die die Ankervorrichtungen für die isolierenden Blöcke (231) freilassen.

11. Verfahren zum Verschließen nach einem der Ansprüche 1 bis 10, wobei die Tankwand bezogen auf die Horizontale geneigt ist, die Tankwand vorzugsweise eine senkrechte Wand (22) ist.

12. Verfahren zum Verschließen nach einem der Ansprüche 1 bis 11, wobei der Schweißbrenner (43) ein Lichtbogenschweißbrenner ist, vorteilhafterweise ohne Zusatzwerkstoff und mit einem Schutzgasstrom, beispielsweise ein Brenner mit Wolframelektrode und Argonstrom.

13. Verfahren zum Verschließen nach einem der Ansprüche 1 bis 12, wobei die wärmeisolierte Barriere eine sekundäre wärmeisolierte Barriere (23) ist und die Dichtungsmembran eine sekundäre Dichtungsmembran (24) ist, und wobei die Tankwand (22) in der Dickenrichtung eine primäre wärmeisolierte Barriere (25), die zumindest teilweise an der sekundären Dichtungsmembran angeordnet ist, und eine primäre Dichtungsmembran aufweist, die an der primären wärmeisolierten Barriere (25) befestigt ist und mit einem verflüssigten Gas in Kontakt kommen soll.

14. Verfahren zum Verschließen nach Anspruch 13, wobei die sekundäre Dichtungsmembran (24) aus einem Verbundwerkstoff gebildet wird, der eine Aluminiumfolie aufweist, die zwischen zwei Glasfasergewebelagen angeordnet ist.

15. Verfahren zum Verschließen nach einem der Ansprüche 1 bis 12, wobei die wärmeisolierte Barriere eine primäre wärmeisolierte Barriere (25) ist und die Dichtungsmembran eine primäre Dichtungsmembran ist, und wobei die Tankwand (22) in der Dickenrichtung eine sekundäre wärmeisolierte Barriere (23) aufweist, die zwischen der primären wärmeisolierten Barriere und der tragenden Wand angeordnet ist, wobei eine sekundäre Dichtungsmembran (24) zwischen der sekundären wärmeisolierten Barriere und der primären wärmeisolierten Barriere angeordnet ist, ein erster Teil der primären wärmeisolierten Barriere (25) auf der sekundären Dichtungsmembran (24) angeordnet ist und ein zweiter Teil an der tragenden Wand (12) angeordnet ist, sich der Endabschnitt (252) der primären wärmeisolierten Barriere (25) im zweiten Teil der primären wärmeisolierten Barriere (25) befindet, der erste Teil und der zweite Teil der primären wärmeisolierten Barriere (25) im Bereich eines Endabschnitts (232) der sekundären wärmeisolierten Barriere (23) nebeneinanderliegen.

16. Schweißanordnung, die eine Schweißhalterung (50) und eine automatische Schweißmaschine (40) aufweist, wobei die Schweißhalterung (50) eine ebene Befestigungsfläche (51) und eine ebene Auflagefläche (53) senkrecht zur Befestigungsfläche aufweist, wobei die Auflagefläche (53) ein Führungsmittel (54) trägt, das sich in einer Richtung erstreckt, wobei die Schweißmaschine (40) ein Verschiebesystem (41) aufweist, das mit dem Führungsmittel (54) zusammenwirkt und so ausgelegt ist, dass es die Schweißmaschine (40) in der Richtung des Führungsmittels (54) bewegt, wobei die Schweißmaschine (40) auch eine Befestigungsstange (42) aufweist, die am Verschiebesystem (41) befestigt ist und ein erstes vom Verschiebesystem (41) entferntes Ende und ein zweites vom Verschiebesystem entferntes Ende umfasst, wobei sich das erste Ende und das zweite Ende in einer Richtung parallel zur Auflagefläche und senkrecht zur Richtung des Führungsmittels auf beiden Seiten des Verschiebesystems (41) befinden, wobei ein Schweißbrenner (43) am ersten Ende befestigt ist und ein Gegengewicht (44) am zweiten Ende befestigt ist und sie so in einem Abstand zum Führungsmittel mit der Auflagefläche zusammenwirken.

17. Anordnung nach Anspruch 16, wobei die Befestigungsfläche der Schweißhalterung (50) eine erste Befestigungsfläche (51) ist und die Schweißhalterung (50) ferner eine zweite Befestigungsfläche (52) senkrecht zur ersten Befestigungsfläche und parallel zur Auflagefläche (53) aufweist.

## Claims

1. Method of closing a sealing membrane (24, 26) for a sealed tank, said tank being in particular thermally insulative, the method including the following steps:
- furnishing a tank wall (22) fixed to a support wall (12), the tank wall including in a direction of thickness a thermally-insulating barrier (23, 25) and a sealing membrane (24, 26) fixed to the thermally-insulating barrier (23, 25), the thermally-insulating barrier (23, 25) including an edge portion (232, 252) situated at one edge of the thermally-insulating barrier (23, 25) in a first direction,
the method being **characterised in that**:
- fixing a metal connecting angle-iron (30) at the level of the edge portion (232, 252), the metal connecting angle-iron (30) including a first flange (31) and a second flange (32) connected to the first flange (31), by welding the first flange (31) by means of a weld bead (33, 34) to a metal part (14, 15) on the support wall, and by connecting the second flange (32) to the sealing membrane (24, 26),
in which the step of welding the first flange is carried out using an automatic welding machine (40) moving on a welding support (50), the welding support (50) including a fixing surface (51) and a support surface (53) perpendicular to the fixing surface (51), the support surface (53) including a guide means (54), in particular a guide rail, extending in a second direction perpendicular to the first direction and to the direction of thickness, the welding machine (40) including a displacement system (41) cooperating with the guide means (54) and configured to move the welding machine (40) in a forward movement parallel to the second direction, the welding machine (40) also including a welding torch (43),
and in which during welding of the first flange the fixing surface (51) of the welding support (50) is fixed to the edge portion (232, 252) of the thermally-insulating barrier so that the support surface (53) is perpendicular to the first direction.

2. Closing method according to claim 1, in which the welding machine also includes an attachment bar (42) fixed to the displacement system (41) and having a first end remote from the displacement system (41) and a second end remote from the displacement system (41), the first end and the second end being situated on respective opposite sides of the displacement system in the direction of thickness, the welding torch (43) being fixed to the first end and a counterweight (44) being fixed to the second end.

3. Closing method according to claim 1 or claim 2, in which the first flange (31) is formed in a plane perpendicular to the first direction and the second flange (32) is formed in a plane perpendicular to the direction of thickness.

4. Closing method according to any one of claims 1 to 3, in which the metal part on the support wall (12) is an anchor flat (14) projecting from the support wall in the direction of thickness and extending in the second direction, the edge portion (232, 252) of the thermally-insulating barrier being adjacent to the anchor flat.

5. Closing method according to any one of claims 1 to 3, in which the metal part on the support wall is a metal portion (15) of the support wall (12).

6. Closing method according to any one of claims 1 to 5, in which the thermally-insulating barrier (23, 25) includes a plurality of insulating blocks (231) juxtaposed to one another and the edge portion of the thermally-insulating barrier includes an edge insulating block (232, 252).

7. Closing method according to any one of claims 1 to 6, in which the weld bead is a first weld bead (33), a metal closing plate (27, 28) being fixed to at least a portion of a surface of the edge portion (232, 252) of the thermally-insulating barrier opposite the support wall (12), an edge of the sealing membrane (24, 26) being fixed to the metal closing plate (27, 28), and in which during the step of fixing the connecting angle-iron (30) the second flange (32) is welded by means of a second weld bead (34) to the metal closing plate (27, 28).

8. Closing method according to claim 7, in which the closing plate (27, 28) includes fixing orifices (29), the closing plate (27, 28) being fixed to the edge portion (232, 252) of the thermally-insulating barrier by means of an anchoring device coming to be inserted in the fixing orifices, and in which during the production of the first weld bead (33) the fixing surface (51) of the welding support (50) is fixed by means of anchor devices (60) that come to be inserted in the fixing orifices (29) left free by the devices anchoring the closing plate (27, 28).

9. Closing method according to claim 7 or claim 8, in which the fixing surface of the welding support (50) is a first fixing surface (51) and the welding support (50) includes a second fixing surface (52) perpendicular to the first fixing surface and parallel to the support surface (53), and in which during the production of the second weld bead (34) the second fixing surface (52) of the welding support (50) is fixed against the support wall (12) so that the support surface (53) is parallel to, preferably coplanar with, the sealing membrane (24, 26), the second weld bead being produced by means of said automatic welding machine (40) moving on the guide means of the welding support (50), said welding support (50) being used to produce both the first weld bead and the second weld bead.

10. Closing method according to claim 9 in combination with claim 6, in which the support wall (12) includes fixing orifices (16), the insulating blocks (231) being anchored to the support wall by means of anchor devices that come to be inserted in the fixing orifices (16), and in which during the production of the second weld bead (34) the second fixing surface (52) of the welding support (50) is fixed by means of anchor devices (60) that come to be inserted in the fixing orifices (16) of the support wall (12) left free by the devices anchoring the insulating blocks (231).

11. Closing method according to any one of claims 1 to 10, in which the tank wall is inclined relative to the horizontal and the tank wall is preferably a vertical wall (22).

12. Closing method according to any one of claims 1 to 11, in which the welding torch (43) is an electric arc welding torch, advantageously with no addition of material and with a flow of inert gas, such as for example a tungsten electrode torch with flow of argon.

13. Closing method according to any one of claims 1 to 12, in which the thermally-insulating barrier is a secondary thermally-insulating barrier (23) and the sealing membrane is a secondary sealing membrane (24) and in which the tank wall (22) includes in the direction of thickness a primary thermally-insulating barrier (25) disposed at least partly on the secondary sealing membrane and a primary sealing membrane fixed to the primary thermally-insulating barrier (25) and intended to be in contact with a liquefied gas.

14. Closing method according to claim 13, in which the secondary sealing membrane (24) is made of a composite material including a sheet of aluminium sandwiched between two glass fibre sheets.

15. Closing method according to any one of claims 1 to 12, in which the thermally-insulating barrier is a primary thermally-insulating barrier (25) and the sealing membrane is a primary sealing membrane and in which the tank wall (22) includes in the direction of thickness a secondary thermally-insulating barrier (23) arranged between the primary thermally-insulating barrier and the support wall and a secondary sealing membrane (24) arranged between the secondary thermally-insulating barrier and the primary thermally-insulating barrier, a first part of the primary thermally-insulating barrier (25) being disposed on the secondary sealing membrane (24) and a second part being disposed against the support wall (12), said edge portion (252) of the primary thermally-insulating barrier (25) being situated in the second part of the primary thermally-insulating barrier (25), the first part and the second part of the primary thermally-insulating barrier (25) being adjacent to one another in line with an edge portion (232) of the secondary thermally-insulating barrier (23).

16. Welding system including a welding support (50) and an automatic welding machine (40), in which the welding support (50) includes a plane fixing surface (51) and a plane support surface (53) perpendicular to the fixing surface, the support surface (53) carrying a guide means (54) extending in a direction, the welding machine (40) including a displacement system (41) cooperating with the guide means (54) and configured to move the welding machine (40) in the direction of the guide means (54), the welding machine (40) also including an attachment bar (42) fixed to the displacement system (41) and having a first end remote from the displacement system (41) and a second end remote from the displacement system, the first end and the second end being situated on respective opposite sides of the displacement system (41) in a direction parallel to the support surface and perpendicular to the direction of the guide means, a welding torch (43) being fixed to the first end and a counterweight (44) being fixed to the second end to cooperate with the support surface at a distance from the guide means.

17. System according to claim 16, in which the fixing surface of the welding support (50) is a first fixing surface (51) and the welding support (50) further includes a second fixing surface (52) perpendicular to the first fixing surface and parallel to the support surface (53).
